# EUROPÄISCHE PATENTSCHRIFT

(11) **EP 4 107 053 B1**
(45) Veröffentlichungstag und Bekanntmachung des Hinweises auf die Patenterteilung: **06.08.2025**
(21) Anmeldenummer: 21709885.4
(22) Anmeldetag: 10.02.2021
(51) Int. Cl.: B62D 15/02, G08G 1/16

(54) **PARKASSISTENZSYSTEM**
PARKING ASSISTANCE SYSTEM
SYSTÈME D'AIDE AU STATIONNEMENT

(30) Priorität: 20.02.2020 DE 102020202188
(43) Veröffentlichungstag der Anmeldung: 28.12.2022
(73) Patentinhaber: AUMOVIO Autonomous Mobility Germany GmbH, 85057 Ingolstadt (DE)
(72) Erfinder: KUNZ, Philipp, 90411 Nürnberg (DE); EDLING, Frank, 90411 Nürnberg (DE)
(74) Vertreter: Aumovio Corporation
(86) Internationale Anmeldenummer: PCT/DE2021/200012
(87) Internationale Veröffentlichungsnummer: WO 2021/164830

(56) Entgegenhaltungen:
- EP-A1- 3 121 095
- EP-A1- 3 124 327
- EP-A2- 2 772 414
- DE-A1- 102011 084 588
- DE-A1- 102017 216 442

## Beschreibung

Die vorliegende Erfindung betrifft einen Parkassistenten bzw. ein Parkassistenzsystem gemäß Anspruch 1 sowie ein Verfahren zur Steuerung eines Einparkvorganges, das insbesondere durch einen erfindungsgemäßen Parkassistenten erfolgt. Ferner betrifft die vorliegende Erfindung ein Fahrzeug, welches ein erfindungsgemäßes Parkassistenzsystem aufweist und/oder zur Steuerung eines Einparkvorganges ein erfindungsgemäßes Verfahren anwendet sowie ein Computerprogramm zur Durchführung des Verfahrens und ein transportables computerlesbares Speichermedium, auf dem das Computerprogramm zur Durchführung des Verfahrens gespeichert ist.

### Technologischer Hintergrund

Gattungsgemäße Fahrzeuge, wie z. B. Personenkraftfahrzeuge (PKW), Lastkraftwägen (LKW) oder Motorräder, werden zunehmend mit Fahrerassistenzsystemen ausgerüstet, welche mit Hilfe von Sensorsystemen die Umgebung erfassen, Verkehrssituationen erkennen und den Fahrer unterstützen können, z. B. durch einen Brems- oder Lenkeingriff oder durch die Ausgabe einer optischen, haptischen oder akustischen Warnung. Als Sensorsysteme zur Umgebungserfassung werden regelmäßig Radarsensoren, Lidarsensoren, Kamerasensoren, Ultraschallsensoren oder dergleichen eingesetzt. Aus den durch die Sensoren ermittelten Sensordaten können anschließend Rückschlüsse auf die Umgebung gezogen werden, womit z. B. auch ein sogenanntes Umfeldmodell erzeugt werden kann. Darauf basierend können anschließend Anweisungen zur Fahrerwarnung/-Information oder zum geregelten Lenken, Bremsen und Beschleunigen ausgegeben werden. Durch die Sensor- und Umfelddaten verarbeitenden Assistenzfunktionen können dadurch z. B. Unfälle mit anderen Verkehrsteilnehmern vermieden oder komplizierte Fahrmanöver erleichtert werden, indem die Fahraufgabe bzw. die Fahrzeugführung unterstützt oder sogar komplett übernommen wird (teil- oder vollautomatisiert). Beispielsweise kann das Fahrzeug z. B. mittels einem Notbremsassistenten (EBA, Emergency Brake Assist) eine autonome Notbremsung (AEB, Automatic Emergency Brake), einem Zeitlückenregeltempomaten bzw. Adaptive Cruise Control-Assistenten (ACC) eine Geschwindigkeits- und Folgefahrtregelung durchführen oder einem Lenkassistenten die Fahrspur des Fahrzeuges halten (LKA, Lane Keep Assist). Ferner werden mittels eines Parkassistenten teil- oder vollautomatisierte Einparkvorgänge durchgeführt, bei denen der Fahrer des Fahrzeuges während des Einparkens auf einem Parkplatz unterstützt bzw. ersetzt wird.

Derartige Parkassistenten bzw. Parkassistenzsysteme können den Parkplatz zunächst mittels umgebungserkennender Sensorik erfassen und definieren die endgültige Position des Ego-Fahrzeugs innerhalb des Parkplatzes (Ziel-Pose oder Zielposition), wobei sich die Zielposition des Fahrzeuges in der Regel zentriert im Parkplatz befindet. Darüber hinaus können auch andere Zielpositionen zur Anpassung an spezielle Parksituationen, wie falsch ausgerichtete Fahrzeuge in den benachbarten Parkplätzen, vorgesehen sein. Beispielsweise kann auch eine prozentuale Positionierung im Parkplatz definiert werden, z. B. kann ein Fahrzeug 30% des Freiraumes im Parkplatz vor dem Ego-Fahrzeug und 70% des Freiraumes im Parkplatz hinter dem Ego-Fahrzeug vorsehen. Zusätzlich kann die Ausrichtung des Ego-Fahrzeugs in der Zielposition durch weitere Grenzmarkierungen, wie z. B. Oberflächenmarkierungen, Ecksteine, Randsteine oder dergleichen, definiert werden.

In Standard-Parksituationen können einfache Regeln (zentrierende, prozentuale Positionierung) verwendet werden, um das Fahrzeug einzuparken. Jedoch werden derartige Anpassungen für bestimmte Situationen entweder ignoriert, was zu einer kontraintuitiven Positionierung im Parkplatz führt, oder zusätzlich implementiert, was zu einem hohen Rechenaufwand und auf Programmierungsebene einen sehr komplexem und schlecht wartbarem Quellcode bedingt. In Hinblick auf die Orientierung des Ego-Fahrzeugs, kann auch eine Fehlausrichtung der anderen neben dem freien Parkplatz geparkten Fahrzeuge zu einer falschen Orientierung des Ego-Fahrzeugs an der Zielposition führen. Zudem sollte das Parkmanöver durch den Parkassistenten in einer Parkposition beendet werden, in der bestimmte Sicherheitsbereiche zu anderen Fahrzeugen, Bordsteinen, Wänden und anderen hohen und niedrigen Objekten eingehalten werden, um Kollisionen und Fahrzeugschäden zu vermeiden. Gleichzeitig sollten beim Einparken aber auch Komfortanforderungen erfüllt werden, die einen gewissen Platzbedarf erfordern, wie z. B. den Kofferraum be- und entladen, der unproblematische Fahrzeugeinstieg und -ausstieg aller Fahrgäste oder dergleichen. Darüber hinaus sollte die Ausrichtung des Ego-Fahrzeugs an der Zielposition eine Fehlausrichtung anderer Fahrzeuge verhindern.

### Druckschriftlicher Stand der Technik

Aus der DE 10 2014 206 235 A1 ist ein Verfahren zur Beurteilung eines Bereichs zum Parken eines Fahrzeugs bekannt, bei dem ein Host-Fahrzeug mittels eines aktiven Parkassistenten eingeparkt wird. Der Parkassistent identifiziert dabei mittels geeigneter Sensorik einen Parkplatz, der von Objekten begrenz wird, z. B. von geparkten Fahrzeugen oder einem Randstein. Das Fahrzeug wird dabei in einer zentrierten Position zwischen umgebenden Objekten, wie z. B. den Fahrzeugen, oder im Allgemeinen entsprechend dem Randstein und/oder der Fahrbahn positioniert. Nachteilig hierbei ist, dass das Host-Fahrzeug stets in zentrierter Position abgestellt wird und nicht auf etwaige Komfortanforderungen des Fahrers eingegangen wird. Ferner kann es durch die Orientierung von anderen Fahrzeugen, welche nicht immer gerade ausgerichtet sind, zu Schwierigkeiten oder Kollisionen beim Ein- und Ausparken des Host-Fahrzeuges kommen.

Die EP 2 772 414 A2 beschreibt ein Parkassistenzsystem für ein Fahrzeug, welches die Größe eines Parkplatzes anhand von Sensordaten ermittelt und eine Einparktrajektorie bestimmt, sodass das Fahrzeug in die Parkposition eingeparkt werden kann. Ferner umfasst das Parkassistenzsystem eine Menschmaschineschnittstelle, welche verschiedene Parkmodusschalter aufweist, welche es dem Nutzer ermöglichen, einen Parkmodus aus einer Anzahl von vordefinierten Parkmodi zu wählen, die unter anderem eine zentrale Parkposition und Parkpositionen mit lateralem und longitudinalem Abstand umfassen. EP 2 772 414 A2 zeigt insbesondere ein Parkassistenzsystem für ein Ego-Fahrzeug, umfassend eine Steuereinrichtung zur Steuerung eines Einparkvorganges, bei dem das Ego-Fahrzeug auf eine Zielposition innerhalb eines Parkplatzes geführt wird, die Steuereinrichtung auf Sensoren zur Umgebungserfassung zugreifen und anhand der Sensordaten einen Parkplatz bestimmen kann, indem den Parkplatz umgebende Objekte erkannt werden, wobei die Steuereinrichtung dazu hergerichtet ist, einen ersten Mindestabstand und einen zweiten Mindestabstand des Ego-Fahrzeuges zu umgebenden Objekten festzulegen, die Steuereinrichtung ferner dazu hergerichtet ist, anhand des ersten Mindestabstandes einen ersten Parkbereich und des zweiten Mindestabstandes einen zweiten Parkbereich festzulegen, und die Steuereinrichtung die Zielposition bestimmt, indem diese innerhalb des ersten und/oder des zweiten Parkbereichs festgelegt wird.

Ferner ist aus DE 10 201 1084 588 A1 ein Verfahren zum Unterstützen eines Fahrers beim Einfahren eines Fahrzeuges in einen Parkbereich offenbart, bei dem eine Zielparkposition in Abhängigkeit von einem schwenkbaren Objekt bzw. einer Tür bestimmt wird.

Zudem beschreibt EP 3 124 327 A1 ein Parkassistenzsystem, das einen ersten Abstand zwischen einem Fahrzeug und einem ersten Hindernis, gemessen durch eine Abstandsmesseinheit, und einen zweiten Abstand zwischen dem Fahrzeug und einem zweiten Hindernis, gemessen durch die Abstandsmesseinheit, erfasst und eine Führungsroute für das Fahrzeug unter Berücksichtigung der Abstände erzeugt.

Die DE 10 2017 216 442 A1 beschreibt ein automatisches Parksystem zum Parken eines Kraftfahrzeugs, bei dem mögliche Kandidaten für freie Parklücken automatisch ermittelt und ausgewählt werden. Dies geschieht auf der Grundlage einer Besetzungszustandskarte, in der Sensordaten eines oder mehrerer Fahrzeugsensoren fusioniert werden. Für eine vom Fahrer auszuwählende Parklücke wird dabei ein Fahrweg geplant und automatisch ausgeführt.

Ferner offenbart EP 3 121 095 A1 ein Verfahren zur Fahrerassistenz, bei dem ein Vorzugsbereich durch Auswählen eines Bereichs eines Fahrzeugs oder einer Tür des Fahrzeugs bestimmt wird, wobei eine optimale Fahrzeugposition und optimale Fahrzeugausrichtung auf einem Parkplatz ermittelt wird, bei der der Vorzugsbereich frei von den Parkplatz begrenzenden Objekten ist, und das Fahrzeug zur optimalen Fahrzeugausrichtung geführt wird.

### Aufgabe der vorliegenden Erfindung

Ausgehend vom Stand der Technik liegt die Aufgabe der vorliegenden Erfindung darin, ein Verfahren zur Verfügung zu stellen, durch das ein gattungsgemäßes Fahrerassistenzsystem in einfacher Weise kostengünstig derart verbessert werden kann, so dass die Nachteile aus dem Stand der Technik überwunden werden, sodass ein platzsparender oder platzoptimierter sowie sicherer Einparkvorgang ermöglicht wird.

### Lösung der Aufgabe

Die vorstehende Aufgabe wird durch die gesamte Lehre des Anspruchs 1 sowie des nebengeordneten Anspruchs gelöst. Zweckmäßige Ausgestaltungen der Erfindung sind in den Unteransprüchen beansprucht.

Erfindungsgemäß umfasst das Parkassistenzsystem für ein Ego-Fahrzeug eine Steuereinrichtung zur Steuerung eines Einparkvorganges, die das Ego-Fahrzeug auf eine Zielposition innerhalb eines Parkplatzes führen kann. Die Steuereinrichtung kann zudem auf Sensoren zur Umgebungserfassung zugreifen und anhand der Sensordaten einen Parkplatz bestimmen, indem den Parkplatz umgebende Objekte erkannt und ausgewertet bzw. klassifiziert werden, und einen Orientierungswinkel des Parkplatzes bestimmen. Ferner ist die Steuereinrichtung dazu hergerichtet ist, einen ersten Mindestabstand und einen zweiten Mindestabstand des Ego-Fahrzeuges zu umgebenden Objekten festzulegen bzw. zu berechnen. Dabei legt die Steuereinrichtung anhand des ersten Mindestabstandes einen ersten Parkbereich (z. B. einen Maximal-Parkbereich, um Kollisionen zu verhindern) und anhand des zweiten Mindestabstandes einen zweiten Parkbereich (z. B. einen Komfort-Parkbereich, um Komfortanforderungen zu erfüllen) fest. Im Anschluss daran kann die Steuereinrichtung dann die Zielposition bestimmen, indem sie diese innerhalb des ersten und/oder des zweiten Parkbereichs festlegt, wobei ein Orientierungswinkel der Zielposition des ersten und des zweiten Parkbereichs bestimmt wird, indem die den Parkplatz begrenzenden bzw. umgebenden Objekte ausgewählt werden und die Ausrichtung der umgebenden Objekte zur Bestimmung des Orientierungswinkels der Zielposition verwendet wird. Daraus resultiert der Vorteil, dass nur ein einziges Parkkonzept benötigt wird, mit dem mehrere verschiedene Anforderungen abgedeckt werden können, indem es sie in verschiedene Entfernungen bzw. Abstände zu den umgebenden Objekten berücksichtigt und eine menschenähnliche Positionierung vornimmt, indem kollisionsvermeidende sowie auch komforterhöhende Aspekte berücksichtigt werden. Dadurch kann in besonderem Maße Platz beim Einparken gespart werden, wodurch sich ein Raumgewinn erzielen lässt bzw. der Platzbedarf verringert wird. Zudem wird die Akzeptanz des durch den Parkassistenten erfolgten Einparkvorganges bzw. die dadurch festgelegte Zielposition beim Fahrer des Ego-Fahrzeuges erhöht, da diese Zielposition auch Komfortwünsche des Fahrers berücksichtigt.

Vorzugsweise handelt es sich bei dem ersten Mindestabstand um einen Abstand, der zwischen den Ego-Fahrzeug und den umgebenden Objekten vorhanden sein sollte bzw. muss, um eine Kollision des Ego-Fahrzeuges mit den umgebenden Objekten zu vermeiden, d. h. ein Mindestabstand von wenigen Zenti- oder Millimetern, vorzugsweise jedoch 1 bis 5 Dezimeter, so dass Kollisionen des Ego-Fahrzeuges vermieden werden können. Die Sicherheit des Einparkvorganges wird dadurch in besonderem Maße erhöht.

Besonders vorteilhaft ist es, wenn es sich bei dem zweiten Mindestabstand um einen Abstand handelt, der zwischen den Ego-Fahrzeug und den umgebenden Objekten vorhanden sein sollte, um diverse Komfortfunktionen zu gewährleisten, wie z. B. das Ein- und Aussteigen aller Fahrgäste oder das Beladen des Kofferraumes. Hierzu muss ausreichend Abstand zur Verfügung stehen. Dieser Abstand kann sich z. B. durch die Geometrie des Ego-Fahrzeuges bemessen. Beispielsweise könnte ein Abstand gewählt werden, der es ermöglicht die Türen des Ego-Fahrzeuges oder den Kofferraum ohne Hinderung zu öffnen, d. h. der Abstand besitzt z. B. die Länge einer Fahrzeugtür. Es kann sich aber auch um einen fixen Abstandwert handeln, z. B. 30, 50, 80 oder 100 Zentimeter.

Ferner kann der zweite Mindestabstand auch derart festgelegt werden, dass dieser um einen prozentualen Wert oder um ein Vielfaches größer ist als der erste Mindestabstand, z. B. um 10 %, 20 %, 50 %, 100 %, 150%, 200 %, 500 % größer ist als der erste Mindestabstand oder den 5-, 10-, 50-, 100-, 500-fachen Wert des ersten Mindestabstandes besitzt.

Zweckmäßigerweise kann der erste und/oder zweite Mindestabstand entsprechend der Geometrie des Ego-Fahrzeuges an allen Seiten des Ego-Fahrzeuges gleich groß sein oder seitenweise variieren oder auch einen Bereich umfassen, d. h. der zweite Mindestabstand kann in Abhängigkeit von den umgebenden Objekten z. B. im Frontbereich 50-100 cm und im Seitenbereich 10-30 cm betragen. Beispielsweise kann an der Frontseite und der Rückseite des Ego-Fahrzeuges mehr Platz vorgesehen sein, d. h. ein größerer Mindestabstand, als an den Fahrzeugseiten, um z. B. das Be- und Entladen des Kofferraumes oder den Zugang zur Motorhaube zu erleichtern und gleichzeitig nah am Bordstein zu parken. Neben der Erhöhung der Sicherheit des Einparkvorganges kann durch eine gezielte Anpassung der Mindestabstände auch der benötigte Platzbedarf eines parkenden Fahrzeuges verringert bzw. optimiert werden.

Zudem kann die Steuereinrichtung neben dem ersten und zweiten Mindestabstand weitere Mindestabstände festlegen, z. B. noch ein oder mehrere Mindestabstände als Zwischenstufen zwischen ersten und zweiten Mindestabstand, sodass entsprechend auch weitere Parkbereiche festgelegt werden, die zur Bestimmung der Zielposition herangezogen werden können.

Vorzugsweise können als Sensor oder Sensoren zur Umgebungserfassung mindestens ein Radar-, Lidar-, Kamera- oder Ultraschallsensor vorgesehen sein. Darüber hinaus kann einer Fusion der einzelnen Sensordaten z. B. innerhalb der Steuereinrichtung erfolgen, um die Umgebungserfassung noch weiter zu verbessern.

Zweckmäßigerweise kann eine Objektklassifikation erfolgen, wobei die erkannten Objekte bzw. die den Parkplatz umgebenden Objekte klassifiziert werden (z. B. Fahrzeug, Wand, Baum, Leitplanke, Bordstein, Straßenmarkierung, Schild und dergleichen). Durch die Objektklassifikation und/oder die ermittelte Geometrie der umgebenden Objekte (Höhe, Breite und dergleichen) eine Klassifikation des Parkplatzes erfolgen, z. B. als Längsparkplatz, Querparkplatz, Schrägparkplatz, Behindertenparkplatz (durch breitere Abmessungen und/oder einer Verkehrszeichenerkennung z. B. mittels Kamera), Duplexparkplatz, LKW-Parkplatz, Bus-Parkplatz, Elektroladeparkplatz oder dergleichen. In vorteilhafter Weise können dann die Mindestabstände oder Parkbereiche anhand der Parkplatzklassifikation, insbesondere selbsttätig bzw. automatisch, festgelegt bzw. variiert werden. Beispielsweise kann bei einem erkannten Längsparkplatz mehr Platz im Front- und Heckbereich des Ego-Fahrzeuges vorgesehen werden, um das Rangieren zu erleichtern und um zu gewährleisten, dass das Ego-Fahrzeug nach am Bordstein geparkt wird, wenn sich der Längsparkplatz an einer Straße befindet. Ferner kann bei einem Elektroladeparkplatz vorgesehen sein, dass ausreichend Zugang zum Ladestecker an Ladestation und/oder Ego-Fahrzeug vorgesehen wird. Zudem können in Quer- und Schrägparkplätzen größere Mindestabstände zu den Fahrzeugseiten vorgesehen sein, als im Front- oder Heckbereich des Ego-Fahrzeuges, um das Ein- und Aussteigen zu erleichtern. Die Objekt- und/oder Parkplatzklassifikation kann ebenfalls durch die Steuereinrichtung erfolgen, indem diese die Sensordaten anhand eines (insbesondere softwareimplementierten) Klassifikators auswertet und verarbeitet, oder durch eine andere dafür vorgesehene Klassifikationseinheit.

Vorzugsweise wird der Orientierungswinkel der Parklücke bzw. des Parkplatzes aus folgenden Merkmalen, insbesondere in der folgenden Priorität bestimmt (falls diese verfügbar sind): Parkbuchtmarkierung(en), Bordstein(e), geparkte Fahrzeuge, andere Objekte (z. B. Gebäudekanten, Bewuchs, Verkehrsschilder oder dergleichen), Fahrzeugorientierung des Ego-Fahrzeugs bei Vorbeifahrt.

In praktischer Weise kann die Steuereinrichtung auf Aktoren des Ego-Fahrzeuges zugreifen, um den Einparkvorgang selbsttätig vorzunehmen. Als Aktoren sind in der Regel die Bremsen, das Getriebe, der Motor oder die Lenkung vorgesehen, jedoch können auch andere Aktoren des Fahrzeuges angesteuert werden.

Ferner umfasst die vorliegende Erfindung auch ein Ego-Fahrzeug, welches einen erfindungsgemäßes Parkassistenzsystem umfasst, um den Fahrer beim Einparken voll- oder teilautomatisiert zu unterstützen, sodass der Fahrer z. B. Aktoren aktiv betätigt, nachdem das Parkassistenzsystem dem Fahrer eine Anweisung (z. B. "Lenkeinschlag nach links oder rechts", "Gas", "Bremsen" und dergleichen) hierzu übermittelt hat oder das der Fahrer keine Betätigung mehr vornehmen muss und der Einparkvorgang selbsttätig bzw. automatisch erfolgt.

Nebengeordnet beansprucht die vorliegende Erfindung auch ein Verfahren zur Steuerung eines Einparkvorganges eines Ego-Fahrzeuges, bei dem das Ego-Fahrzeug auf eine Zielposition innerhalb eines Parkplatzes geführt wird. Hierzu werden Sensordaten von geeigneten Sensoren zur Umgebungserfassung herangezogen, um den Parkplatz zu bestimmen, indem den Parkplatz umgebende Objekte erkannt werden, sowie dessen Orientierungswinkel zu bestimmen. Dabei werden ein erster Mindestabstand und ein zweiter Mindestabstand des Ego-Fahrzeuges zu umgebenden Objekten festgelegt. Im Anschluss daran kann dann anhand des ersten Mindestabstandes ein erster Parkbereich und anhand des zweiten Mindestabstandes ein zweiter Parkbereich festgelegt werden. Die Zielposition des Ego-Fahrzeuges wird dann bestimmt, indem diese innerhalb des ersten und/oder des zweiten Parkbereichs festgelegt wird, wobei der Orientierungswinkel der Zielposition des ersten und des zweiten Parkbereichs bestimmt wird, indem die den Parkplatz begrenzenden bzw. umgebenden Objekte ausgewählt werden und die Ausrichtung der umgebenden Objekte zur Bestimmung des Orientierungswinkels der Zielposition verwendet wird.

Zweckmäßigerweise kann das Verfahren folgende Verfahrensschritte umfassen:
- Verfahrensschritt 1: Bestimmen eines Orientierungswinkels des Ego-Fahrzeuges in der Zielposition durch eine Priorisierung der umgebenden Objekte,
- Verfahrensschritt 2: Bestimmen des ersten und zweiten Parkbereichs durch Überprüfen der Umgebung auf notwendige Minimalabstände und auf geeignete Komfortabstände,
- Verfahrensschritt 3: Auswählen eines Punktes des zweiten Parkbereichs zur Positionierung des Ego Fahrzeugs mit in Verfahrensschritt 1 berechneter Orientierung basierend auf der Lage der umgebenden Objekte und Markierungen.

Gemäß einer besonderen Ausgestaltung des Verfahrens kann im Verfahrensschritt 3 ein Punkt des ersten Parkbereichs ausgewählt werden, sodass auch die Zielposition des Ego-Fahrzeuges anhand des ausgewählten Punktes des ersten Parkbereichs eingestellt wird, wenn ein Festlegen der Zielposition anhand des ausgewählten Punktes des zweiten Parkbereichs nicht erfolgen konnte. Sozusagen wird auf den ersten Parkbereich, d. h. den Maximal-Parkbereich, ausgewichen, sobald der Komfort-Parkbereich nicht festlegbar ist bzw. nicht ausreichend Platz für diesen zur Verfügung steht. Daraus resultiert der Vorteil, dass das Ego-Fahrzeug selbsttätig auf den Maximal-Parkbereich einparkt, wenn der Komfort-Parkbereich nicht erreicht werden kann bzw. die Ausdehnung des Parkplatzes zu gering ist, um den Komfort-Parkbereich zu wählen.

Ferner kann im dritten Verfahrensschritt auch ein Punkt des ersten Parkbereichs ausgewählt werden, wobei dann die Zielposition des Ego-Fahrzeuges anhand des ausgewählten Punktes des ersten und des zweiten Parkbereichs gleichzeitig eingestellt wird.

Ferner umfasst die vorliegende Erfindung ein Computerprogramm mit Programmcode zur Durchführung des erfindungsgemäßen Verfahrens, wenn das Computerprogramm in einem Computer oder einem sonstigen aus dem Stand der Technik bekannten programmierbaren Rechner ausgeführt wird. Demzufolge kann das Verfahren auch als rein computerimplementiertes Verfahren ausgestaltet sein, wobei der Begriff "computerimplementiertes Verfahren" im Sinne der Erfindung eine Ablaufplanung oder Vorgehensweise beschreibt, welche anhand eines Rechners verwirklicht bzw. durchgeführt wird. Der Rechner, wie z. B. ein Computer, ein Computernetzwerk oder eine andere aus dem Stand der Technik bekannte programmierbare Vorrichtung (z. B. eine einen Prozessor, Mikrocontroller oder dergleichen umfassenden Rechnervorrichtung), kann dabei mittels programmierbarer Rechenvorschriften Daten verarbeiten.

Zudem umfasst die vorliegende Erfindung ein computerlesbares Speichermedium, das Anweisungen umfasst, welche den Computer, auf dem sie ausgeführt werden, veranlassen, ein Verfahren nach mindestens einem der vorhergehenden Ansprüche durchzuführen.

### Beschreibung der Erfindung anhand von Ausführungsbeispielen

Im Folgenden wird die Erfindung anhand von zweckmäßigen Ausführungsbeispielen näher erläutert. Es zeigen:
- Fig. 1: eine stark vereinfachte schematische Darstellung eines Ego-Fahrzeuges mit erfindungsgemäßem Assistenzsystem;
- Fig. 2a: eine vereinfachte Darstellung eines Verkehrsszenarios, bei dem ein Ego-Fahrzeug mit einem erfindungsgemäßen Assistenzsystem einen Parkplatz erfasst;
- Fig. 2b: eine vereinfachte Darstellung eines Verkehrsszenarios, bei dem ein Ego-Fahrzeug mit einem erfindungsgemäßen Assistenzsystem einen Parkplatz erfasst, wobei der Parkplatz durch Parkplatzmarkierungen sowie den Bordstein begrenzt wird;
- Fig. 3a: eine vereinfachte Darstellung des Verkehrsszenarios aus Fig. 2a, bei dem das Fahrzeug die Zielposition im Parkplatz anhand des erfindungsgemäßen Assistenzsystem erreicht hat, sowie
- Fig. 3b: eine vergrößerte Darstellung des Verkehrsszenarios aus Fig. 3a.

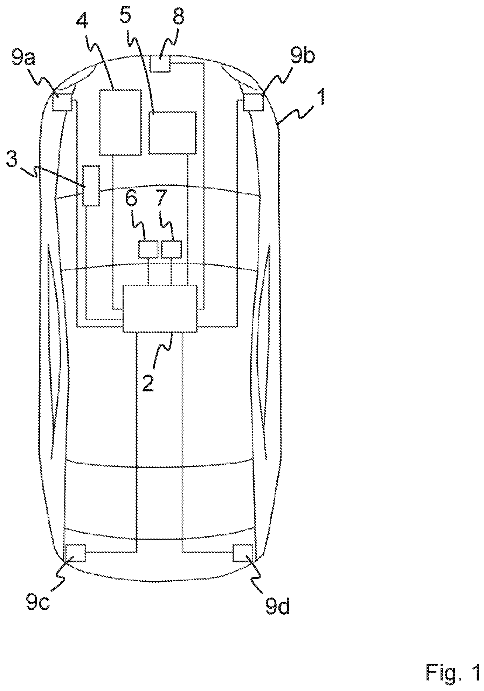

Bezugsziffer 1 in Fig. 1 bezeichnet ein Fahrzeug bzw. Ego-Fahrzeug mit verschiedenen Aktoren (Lenkung 3, Motor 4, Bremse 5), welches eine Steuereinrichtung 2 (ECU, Electronic Control Unit oder ADCU, Assisted and Automated Driving Control Unit) aufweist, durch die eine (teil-) automatisierte Steuerung des Ego-Fahrzeuges 1 erfolgen kann, indem die Steuereinrichtung 2 auf die Aktoren zugreifen kann. Ferner weist das Ego-Fahrzeug 1 Sensoren zur Umfelderfassung auf (Kamera 6, Lidarsensor 7, Radarsensor 8 sowie Ultraschallsensoren 9a-9d), deren Sensordaten zur Umfeld- und Objekterkennung genutzt werden, sodass verschiedene Assistenzfunktionen, wie z. B. Parkassistent, Notbremsassistent (EBA, Electronic Brake Assist), Abstandsfolgeregelung (ACC, Adaptive Cruise Control), Spurhalteregelung bzw. ein Spurhalteassistent (LKA, Lane Keep Assist) oder dergleichen, realisiert werden können. Die Ausführung der Assistenzfunktionen erfolgt dabei über die Steuereinrichtung 2 bzw dem dort hinterlegten Algorithmus.

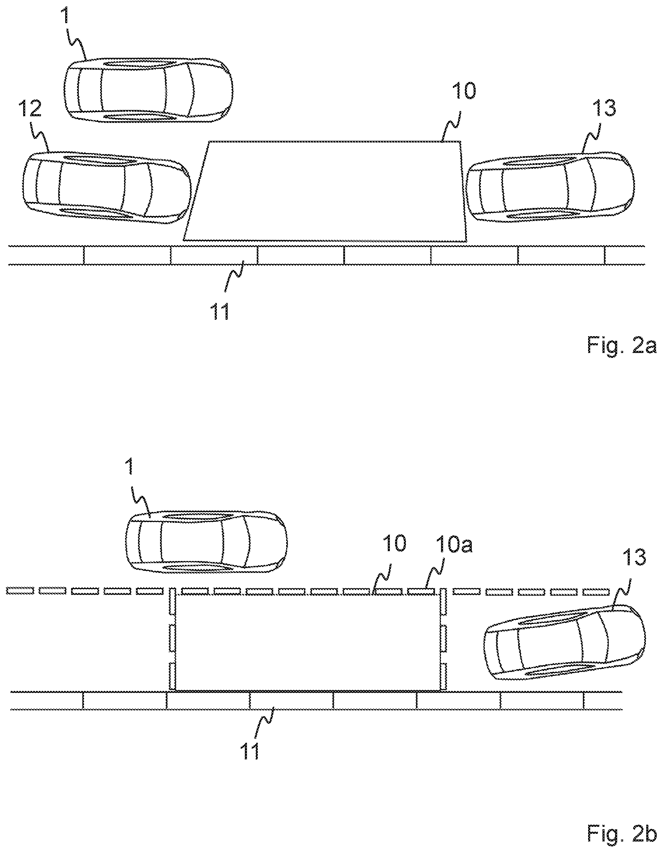

Fig. 2a zeigt ein Verkehrsszenario, bei dem das Ego-Fahrzeug 1 entlang einer Straße fährt, welche an der rechten Seite durch einen Bordstein 11 begrenzt ist. Ferner befinden sich an der rechten Straßenseite zwei geparkte Fahrzeuge 12, 13, zwischen denen sich eine Parklücke bzw. ein Parkplatz 10 befindet. Der Parkplatz 10 ist ein Längsparkplatz, welcher durch mehrere, limitierende Elemente, d. h. durch die geparkten Fahrzeuge 12, 13 sowie der Rand- bzw. Bordstein 11, begrenzt wird. Ferner könnten den Parkplatz 10 auch andere limitierende Elemente begrenzen, wie z. B. Parkplatzmarkierungen 10a (gemäß Fig. 2b) bzw. Oberflächenmarkierungen, Wände, Bewuchs, Zäune oder andere undefinierte hohe/niedrige Objekte. Das Ego-Fahrzeug 1 umfasst dabei eine erfindungsgemäße Steuereinrichtung 2 bzw. ein erfindungsgemäßes Parkassistenzsystem sowie geeignete Sensoren zur Umgebungserfassung, mittels denen das Ego-Fahrzeug 1 die Umgebung sowie darin befindliche Objekte erfassen kann (Die Steuereinrichtung und die Sensoren sind der Übersichtlichkeit halber in Fig. 2a/Fig. 2b nicht dargestellt). Dadurch kann das Ego-Fahrzeug 1 die umgebenden Objekte und damit den Parkplatz 10 im Vorbeifahren erfassen und einen Einparkvorgang starten bzw. durchführen, wobei anhand des erfindungsgemäßen Verfahrens Entfernungs- oder Platzeinschränkungen übersetzt werden können, sodass sowohl Sicherheits- als auch Komfortanforderungen in einem Konzept berücksichtigt werden.

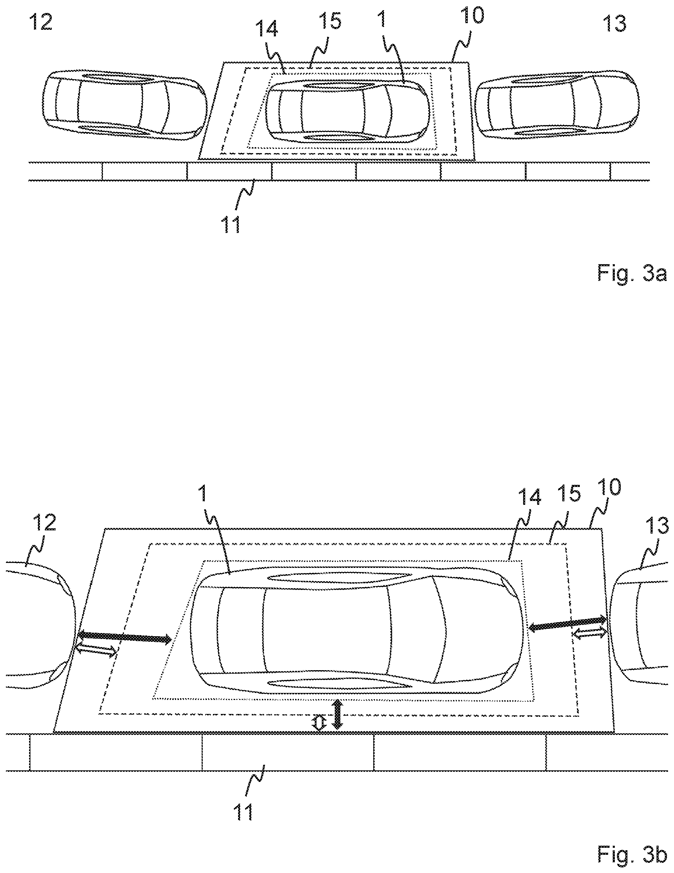

In den Fig. 3a und 3b ist nunmehr das Verkehrsszenario aus Fig. 2a dargestellt, wobei sich das Ego-Fahrzeug 1 auf der Zielposition im Parkplatz 10 befindet. Die Entfernungen zu den umgebenden Objekten werden aufgeteilt in einem ersten Mindestabstand, d. h. die Minimaldistanz, die notwendig ist, um Kollisionen zu vermeiden, und einen zweiten Mindestabstand, d. h. der Komfortdistanz bzw. der Komfortabstand, der benötigt wird, um Komfortanforderungen (Ein- und Aussteigen, Be- und Entladen und dergleichen) zu gewährleisten. In Fig. 3b ist der erste Mindestabstand bzw. die Minimaldistanzen mit weißen Pfeilen und der zweite Mindestabstand bzw. die Komfortdistanzen mit schwarzen Pfeilen dargestellt. Dadurch, dass die Minimaldistanzen eingehalten werden müssen, um Kollisionen zu vermeiden, dürfen diese bei der Festlegung der Zielposition nicht verletzt bzw. unterschritten werden. Komfortdistanzen hingegen bieten ausreichend Platz, um Komfortanforderungen einzuhalten, sodass diese verletzt bzw. unterschritten werden können, wenn nicht ausreichend Platz zur Verfügung steht und die Parkanforderung die Komfortanforderungen übersteigen. Somit werden beim Vorhandensein eines Parkplatzes anhand der Mindestabstände zwei Parkbereiche 14, 15 bestimmt, d. h. ein erster Parkbereich 14 mit der minimal benötigten Entfernung zu den umgebenden Objekten und ein zweiter Parkbereich 15 mit einer Entfernung zu den umgebenden Objekten, die eine komfortable Parkplatznutzung ermöglicht. Infolgedessen erfolgt somit eine Berechnung zweier virtueller Parkplätze bzw. Parkbereiche 14, 15, wobei der erste Parkbereich 14 mit den minimal benötigten Entfernungen zu umgebenden Objekten (erster Mindestabstand) auch sogenannter als Maximal-Parkplatz und der zweite Parkbereich 15 mit den Komfort-Entfernungen (zweiter Mindestabstand) als Komfort-Parkplatz bezeichnet werden kann. Wenn dabei an einer Kante bzw. einer Seite des Ego-Fahrzeuges 1 mehrere Begrenzungselemente bzw. umgebende Objekte vorhanden sind, ist immer der maximal benötigte Abstand zu einem Grenzelement bzw. Objekt an dieser Seite relevant für die Festlegung des ersten und zweiten Parkbereiches 14, 15.

Zweckmäßigerweise kann die Zielposition des Maximal-Parkplatzes bzw. Komfort-Parkplatzes anhand des erfindungsgemäßen (mehrstufigen) Verfahrensablaufes erreicht werden. Beispielsweise kann dabei als erster Schritt zunächst der Orientierungswinkel der Zielposition bestimmt bzw. berechnet werden, indem die den Parkplatz begrenzenden bzw. umgebenden Objekte durch eine Priorisierung, z. B. anhand einer Prioritätenliste (Beispielsweise kann die Priorität mit absteigender Wichtigkeit folgendes umfassen: Oberflächenkennzeichnung, Randstein, erfasste Objekte sowie Ego-Fahrzeugausrichtung während des Parkmanövers), ausgewählt werden, wobei auch die Ausrichtung der umgebenden Objekte verwendet werden kann. Ein begrenzendes Objekt gilt dabei nur dann als "gültig für die Ausrichtung", wenn die resultierende Ausrichtung des Ego-Fahrzeugs 1 beim Passieren des Parkplatzes 10 einen Schwellenwert im Vergleich zur Ego-Fahrzeugausrichtung nicht überschreitet. Das erste existierende und gültige Objekt der Prioritätenliste, wird dann übernommen. Im Anschluss daran können dann alle anderen erkannten parkenden Fahrzeuge in derselben Parkreihe verwendet werden, um die Orientierung auf der Prioritätsstufe (geparkte Fahrzeuge) zu definieren, sodass die Robustheit gegenüber falsch ausgerichteten Fahrzeugen weiter erhöht wird. In praktischer Weise kann auch die durchschnittliche Orientierung aller gültigen (wie oben definiert "für die Ausrichtung gültig") geparkten Fahrzeuge verwendet werden, um die Orientierung des Ego-Fahrzeugs 1 in der Zielposition festzulegen. Als zweiter Schritt wird dann eine Ecke bzw. ein Punkt des Komfort-Parkbereichs basierend auf die Positionen der umgebenden Begrenzungsobjekte gewählt. Mit dem gegeben Orientierungswinkel kann dann die Position in dieser Ecke definiert werden, ohne die Grenzen des Komfort-Parkbereichs zu verletzen.

Ferner kann, wenn Schritt 2 fehlgeschlagen ist, beispielsweise indem die Grenzen des Komfort-Parkbereichs verletzt bzw. unterschritten wurden, eine Position innerhalb der Grenzen des Maximal-Parkplatzes definiert werden. Diese Position wird durch die Längszentrierung und seitlichen Zentrierung zwischen den Rändern des Maximal-Parkplatzes definiert, wenn die Grenzen des Komfort-Parkplatzes zu klein sind, um jeweils für jede Richtung verwendet zu werden. Wenn in einer Richtung eine Positionierung innerhalb des Komfort-Parkplatzes möglich ist, kann der zweite Schritt auch nur für diese Richtung verwendet werden. Die Zentrierung erfolgt dabei auch nur in dem Maße, dass der gesamte Komfort-Parkplatz in die gewählte Richtung abgedeckt ist. Dies gewährleistet eine kontinuierliche Veränderung der Zielposition bei kontinuierlichen Veränderungen in der Umwelt.

In praktischer Weise kann das erfindungsgemäße Verfahren auch genutzt werden, um andere Fahr- und Assistenzfunktionen zu verbessern, wie z. B. beim sogenannten "Garage Parking", um die Positionierung in der Garage zu verbessern, beim sogenannten "Trained Parking", um die endgültige Positionierung am Ende des erlernten Weges zu verbessern, oder beim sogenannten "Valet Parking", um die endgültige Positionierung im Parkplatz zu verbessern. Durch die vorteilhaften Eigenschaften und die vielseitige Einsetzbarkeit stellt die Erfindung somit einen ganz besonderen Beitrag auf dem Gebiet der Fahrerassistenzsysteme insbesondere der Parkassistenten dar.

## Patentansprüche

1. Parkassistenzsystem für ein Ego-Fahrzeug (1), umfassend
eine Steuereinrichtung (2) zur Steuerung eines Einparkvorganges, bei dem das Ego-Fahrzeug (1) auf eine Zielposition innerhalb eines Parkplatzes (10) geführt wird,
die Steuereinrichtung (2) auf Sensoren zur Umgebungserfassung zugreifen und anhand der Sensordaten einen Parkplatz (10) bestimmen kann, indem den Parkplatz (10) umgebende Objekte (10a, 11, 12, 13) erkannt werden und ein Orientierungswinkel des Parkplatzes (10) bestimmt wird, wobei
die Steuereinrichtung (2) dazu hergerichtet ist, einen ersten Mindestabstand und einen zweiten Mindestabstand des Ego-Fahrzeuges (1) zu umgebenden Objekten (10a, 11, 12, 13) festzulegen,
die Steuereinrichtung (2) ferner dazu hergerichtet ist, anhand des ersten Mindestabstandes einen ersten Parkbereich (14) und des zweiten Mindestabstandes einen zweiten Parkbereich (15) festzulegen, und
die Steuereinrichtung (2) die Zielposition bestimmt, indem diese innerhalb des ersten und/oder des zweiten Parkbereichs (14, 15) festgelegt wird, wobei
ein Orientierungswinkel der Zielposition des ersten und des zweiten Parkbereichs (14, 15) bestimmt wird, indem die den Parkplatz (10) begrenzenden bzw. umgebenden Objekte (10a, 11, 12, 13) ausgewählt werden und die Ausrichtung der umgebenden Objekte (10a, 11, 12, 13) zur Bestimmung des Orientierungswinkels der Zielposition verwendet wird.

2. Parkassistenzsystem nach Anspruch 1, **dadurch gekennzeichnet, dass** es sich bei dem ersten Mindestabstand um einen Abstand handelt, der zwischen dem Ego-Fahrzeug (1) und den umgebenden Objekten vorhanden sein muss, um eine Kollision des Ego-Fahrzeuges (1) mit den umgebenden Objekten (10a, 11, 12, 13) zu vermeiden.

3. Parkassistenzsystem nach Anspruch 1 oder 2, **dadurch gekennzeichnet, dass** es sich bei dem zweiten Mindestabstand um einen Abstand handelt, der zwischen den Ego-Fahrzeug (1) und den umgebenden Objekten (10a, 11, 12, 13) vorhanden sein sollte, um Komfortfunktionen zu gewährleisten.

4. Parkassistenzsystem nach mindestens einem der vorhergehenden Ansprüche, **dadurch gekennzeichnet, dass** der zweite Mindestabstand derart festgelegt wird, dass dieser um einen prozentualen Wert größer ist als der erste Mindestabstand.

5. Parkassistenzsystem nach mindestens einem der vorhergehenden Ansprüche, **dadurch gekennzeichnet, dass** der erste und/oder zweite Mindestabstand entsprechend der Geometrie des Ego-Fahrzeuges (1) an allen Seiten des Ego-Fahrzeuges (1) gleich ist oder seitenweise variiert.

6. Parkassistenzsystem nach mindestens einem der vorhergehenden Ansprüche, **dadurch gekennzeichnet, dass** neben dem ersten und zweiten Mindestabstand weitere Mindestabstände und/oder weitere Parkbereiche festgelegt werden.

7. Parkassistenzsystem nach mindestens einem der vorhergehenden Ansprüche, **dadurch gekennzeichnet, dass** als Sensor oder Sensoren zur Umgebungserfassung mindestens ein Kamera- (6), Lidar- (7), Radar- (8), oder Ultraschallsensor (9a-9d) vorgesehen ist.

8. Parkassistenzsystem nach mindestens einem der vorhergehenden Ansprüche, **dadurch gekennzeichnet, dass** eine Klassifikation des Parkplatzes (10) erfolgt und die Mindestabstände oder Parkbereiche (14, 15) anhand der Klassifikation festgelegt werden.

9. Parkassistenzsystem nach mindestens einem der vorhergehenden Ansprüche, **dadurch gekennzeichnet, dass** der Orientierungswinkel des Parkplatzes (10) aus folgenden Merkmalen, insbesondere in folgender Priorität, bestimmt wird: Parkplatzmarkierung (10a), Bordstein (11), geparkte Fahrzeuge (11, 12), andere Objekte, Fahrzeugorientierung des Ego-Fahrzeugs (1) bei Vorbeifahrt.

10. Parkassistenzsystem nach mindestens einem der vorhergehenden Ansprüche, **dadurch gekennzeichnet, dass** die Steuereinrichtung (2) auf Aktoren des Ego-Fahrzeuges (1) zugreifen kann und den Einparkvorgang selbsttätig vornimmt.

11. Verfahren zur Steuerung eines Einparkvorganges eines Ego-Fahrzeuges (1), bei dem
das Ego-Fahrzeug (1) auf eine Zielposition innerhalb eines Parkplatzes (10) geführt wird,
Sensordaten von Sensoren zur Umgebungserfassung herangezogen werden, um den Parkplatz (10) zu bestimmen, indem den Parkplatz (10) umgebende Objekte (10a, 11, 12, 13) erkannt werden und ein Orientierungswinkel des Parkplatzes (10) bestimmt wird, wobei
ein erster Mindestabstand und ein zweiter Mindestabstand des Ego-Fahrzeuges (1) zu umgebenden Objekten (10a, 11, 12, 13) festgelegt wird,
anhand des ersten Mindestabstandes ein erster Parkbereich (14) und des zweiten Mindestabstandes ein zweiter Parkbereich (15) festgelegt wird, und
die Zielposition bestimmt, indem diese innerhalb des ersten und/oder des zweiten Parkbereichs (14, 15) festgelegt wird, wobei
ein Orientierungswinkel der Zielposition des ersten und des zweiten Parkbereichs (14, 15) bestimmt wird, indem die den Parkplatz (10) begrenzenden bzw. umgebenden Objekte (10a, 11, 12, 13) ausgewählt werden und die Ausrichtung der umgebenden Objekte (10a, 11, 12, 13) zur Bestimmung des Orientierungswinkels der Zielposition verwendet wird.

12. Verfahren nach Anspruch 11, **dadurch gekennzeichnet, dass** das Verfahren ferner folgende Verfahrensschritte umfasst:
- Bestimmen eines Orientierungswinkels des Ego-Fahrzeuges (1) in der Zielposition durch eine Priorisierung der umgebenden Objekte (10a, 11, 12, 13),
- Bestimmen des ersten (14) und zweiten Parkbereichs (15) durch Überprüfen der Umgebung auf notwendige Minimalabstände und auf geeignete Komfortabstände zu den umgebenden Objekten (10a, 11, 12, 13), und
- Auswählen eines Punktes des zweiten Parkbereichs (15) zur Positionierung des Ego Fahrzeugs (1) anhand des Orientierungswinkels.

13. Computerprogramm mit Programmcode zur Durchführung des Verfahrens nach einem der Ansprüche 11-12 wenn das Computerprogramm auf einem Computer ausgeführt wird.

14. Computerlesbares Speichermedium umfassend Anweisungen, welche den Computer, auf dem sie ausgeführt werden, veranlassen, das Verfahren nach einem der Ansprüche 11-12 auszuführen.

15. Fahrzeug (1), umfassend
ein Parkassistenzsystem nach mindestens einem der vorhergehenden Ansprüche 1-9, ein Computerprogramm nach Anspruch 13 oder ein computerlesbares Speichermedium nach Anspruch 14 und/oder
bei dem ein Einparkvorgang anhand einem Verfahren nach einem der Ansprüche 11-12 gesteuert wird.

## Claims

1. Parking assistance system for an ego vehicle (1), comprising a control device (2) for controlling a parking process in which the ego vehicle (1) is guided to a target position within a parking space (10),
the control device (2) can access sensors for capturing the environment and, based on the sensor data, can determine a parking space (10) by detecting objects (10a, 11, 12, 13) surrounding the parking space (10) and determining an orientation angle of the parking space (10), wherein
the control device (2) is set up to define a first minimum distance and a second minimum distance of the ego vehicle (1) from surrounding objects (10a, 11, 12, 13),
the control device (2) is further set up to define a first parking area (14) on the basis of the first minimum distance and a second parking area (15) on the basis of the second minimum distance, and
the control device (2) determines the target position by defining it within the first and/or the second parking area (14, 15), wherein
an orientation angle of the target position in the first and the second parking area (14, 15) is determined by selecting the objects (10a, 11, 12, 13) delimiting or surrounding the parking space (10) and by using the orientation of the surrounding objects (10a, 11, 12, 13) to determine the orientation angle of the target position.

2. Parking assistance system according to Claim 1, **characterized in that** the first minimum distance is a distance which must be present between the ego vehicle (1) and the surrounding objects in order to avoid a collision between the ego vehicle (1) and the surrounding objects (10a, 11, 12, 13).

3. Parking assistance system according to Claim 1 or 2, **characterized in that** the second minimum distance is a distance which should be present between the ego vehicle (1) and the surrounding objects (10a, 11, 12, 13) in order to ensure comfort functions.

4. Parking assistance system according to at least one of the preceding claims, **characterized in that** the second minimum distance is defined in such a way that it is a percentage value greater than the first minimum distance.

5. Parking assistance system according to at least one of the preceding claims, **characterized in that** the first and/or second minimum distance is the same on all sides of the ego vehicle (1) or varies from side to side according to the geometry of the ego vehicle (1).

6. Parking assistance system according to at least one of the preceding claims, **characterized in that**, in addition to the first and second minimum distance, further minimum distances and/or further parking areas are defined.

7. Parking assistance system according to at least one of the preceding claims, **characterized in that** at least one camera sensor (6), lidar sensor (7), radar sensor (8) or ultrasonic sensor (9a-9d) is provided as the sensor or sensors for capturing the environment.

8. Parking assistance system according to at least one of the preceding claims, **characterized in that** the parking space (10) is classified and the minimum distances or parking areas (14, 15) are defined on the basis of the classification.

9. Parking assistance system according to at least one of the preceding claims, **characterized in that** the orientation angle of the parking space (10) is determined from the following features, in particular in the following priority: parking space marking (10a), kerb (11), parked vehicles (11, 12), other objects, vehicle orientation of the ego vehicle (1) when driving past.

10. Parking assistance system according to at least one of the preceding claims, **characterized in that** the control device (2) can access actuators of the ego vehicle (1) and carries out the parking process automatically.

11. Method for controlling a parking process of an ego vehicle (1) in which the ego vehicle (1) is guided to a target position within a parking space (10), sensor data from sensors for capturing the environment are used to determine the parking space (10) by detecting objects (10a, 11, 12, 13) surrounding the parking space (10) and determining an orientation angle of the parking space (10), wherein
a first minimum distance and a second minimum distance of the ego vehicle (1) from surrounding objects (10a, 11, 12, 13) are defined,
a first parking area (14) is defined on the basis of the first minimum distance and a second parking area (15) is defined on the basis of the second minimum distance, and
the target position is determined by defining it within the first and/or the second parking area (14, 15), wherein
an orientation angle of the target position in the first and the second parking area (14, 15) is determined by selecting the objects (10a, 11, 12, 13) delimiting or surrounding the parking space (10) and by using the orientation of the surrounding objects (10a, 11, 12, 13) to determine the orientation angle of the target position.

12. Method according to Claim 11, **characterized in that** the method also comprises the following method steps:
- determining an orientation angle of the ego-vehicle (1) in the target position by prioritizing the surrounding objects (10a, 11, 12, 13),
- determining the first parking area (14) and the second parking area (15) by checking the environment for necessary minimum distances and suitable comfort distances from the surrounding objects (10a, 11, 12, 13), and
- selecting a point of the second parking area (15) for positioning the ego vehicle (1) based on the orientation angle.

13. Computer program having program code for carrying out the method according to one of Claims 11-12 when the computer program is executed on a computer.

14. Computer-readable storage medium comprising instructions which cause the computer on which they are executed to carry out the method according to one of Claims 11-12.

15. Vehicle (1) comprising
a parking assistance system according to at least one of the preceding Claims 1-9, a computer program according to Claim 13 or a computer-readable storage medium according to Claim 14, and/or
in which a parking process is controlled using a method according to one of Claims 11-12.

## Revendications

1. Système d'aide au stationnement pour un véhicule autonome (1), comprenant un appareil de commande (2) pour commander une opération de stationnement dans laquelle le véhicule autonome (1) est guidé vers une position cible à l'intérieur d'une place de stationnement (10),
l'appareil de commande (2) pouvant accéder à des capteurs pour la détection de l'environnement et déterminer une place de stationnement (10) à l'aide des données de capteur, en reconnaissant des objets (10a, 11, 12, 13) entourant la place de stationnement (10) et en déterminant un angle d'orientation de la place de stationnement (10),
l'appareil de commande (2) étant adapté pour définir une première distance minimale et une deuxième distance minimale du véhicule autonome (1) par rapport aux objets environnants (10a, 11, 12, 13),
l'appareil de commande (2) étant en outre adapté pour définir une première zone de stationnement (14) sur la base de la première distance minimale et une deuxième zone de stationnement (15) sur la base de la deuxième distance minimale, et
l'appareil de commande (2) déterminant la position cible en définissant celle-ci à l'intérieur de la première et/ou de la deuxième zone de stationnement (14, 15), un angle d'orientation de la position cible des première et deuxième zones de stationnement (14, 15) étant déterminé en sélectionnant les objets (10a, 11, 12, 13) délimitant ou entourant la place de stationnement (10) et en utilisant l'orientation des objets environnants (10a, 11, 12, 13) pour déterminer l'angle d'orientation de la position cible.

2. Système d'aide au stationnement selon la revendication 1, **caractérisé en ce que** la première distance minimale consiste en une distance qui doit exister entre le véhicule autonome (1) et les objets environnants pour éviter une collision entre le véhicule autonome (1) et les objets environnants (10a, 11, 12, 13).

3. Système d'aide au stationnement selon la revendication 1 ou 2, **caractérisé en ce que** la deuxième distance minimale consiste en une distance qui devrait exister entre le véhicule autonome (1) et les objets environnants (10a, 11, 12, 13) afin de garantir des fonctions de confort.

4. Système d'aide au stationnement selon au moins l'une quelconque des revendications précédentes, **caractérisé en ce que** la deuxième distance minimale est définie de telle sorte qu'elle soit supérieure à la première distance minimale d'un pourcentage.

5. Système d'aide au stationnement selon au moins l'une quelconque des revendications précédentes, **caractérisé en ce que** la première et/ou la deuxième distance minimale est la même sur tous les côtés du véhicule autonome (1) ou varie latéralement en fonction de la géométrie du véhicule autonome (1).

6. Système d'aide au stationnement selon au moins l'une quelconque des revendications précédentes, **caractérisé en ce qu'**outre les première et deuxième distances minimales, d'autres distances minimales et/ou d'autres zones de stationnement sont définies.

7. Système d'aide au stationnement selon au moins l'une quelconque des revendications précédentes, **caractérisé en ce qu'**il est prévu comme capteur ou capteurs pour la détection de l'environnement au moins un capteur à caméra (6), à lidar (7), à radar (8) ou à ultrasons (9a-9d).

8. Système d'aide au stationnement selon au moins l'une quelconque des revendications précédentes, **caractérisé en ce qu'**une classification de la place de stationnement (10) est effectuée et les distances minimales ou les zones de stationnement (14, 15) sont définies à l'aide de la classification.

9. Système d'aide au stationnement selon au moins l'une quelconque des revendications précédentes, **caractérisé en ce que** l'angle d'orientation de la place de stationnement (10) est déterminé à partir des caractéristiques suivantes, notamment dans la priorité suivante : marquage de la place de stationnement (10a), bordure du trottoir (11), véhicules garés (11, 12), autres objets, orientation de véhicule du véhicule autonome (1) lors du passage.

10. Système d'aide au stationnement selon au moins l'une quelconque des revendications précédentes, **caractérisé en ce que** l'appareil de commande (2) peut accéder à des actionneurs du véhicule autonome (1) et effectue le processus de stationnement de manière autonome.

11. Procédé de commande d'une opération de stationnement d'un véhicule autonome (1), dans lequel
le véhicule autonome (1) est guidé vers une position cible à l'intérieur d'une place de stationnement (10),
des données de capteurs pour la détection de l'environnement sont utilisées pour déterminer la place de stationnement (10), en détectant des objets (10a, 11, 12, 13) entourant la place de stationnement (10) et en déterminant un angle d'orientation de la place de stationnement (10),
une première distance minimale et une deuxième distance minimale du véhicule autonome (1) par rapport aux objets environnants (10a, 11, 12, 13) étant définies, une première zone de stationnement (14) étant définie à l'aide de la première distance minimale et une deuxième zone de stationnement (15) étant définie à l'aide de la deuxième distance minimale, et
la position cible étant déterminée en définissant celle-ci à l'intérieur de la première et/ou de la deuxième zone de stationnement (14, 15),
un angle d'orientation de la position cible des première et deuxième zones de stationnement (14, 15) étant déterminé en sélectionnant les objets (10a, 11, 12, 13) délimitant ou entourant la place de stationnement (10) et en utilisant l'orientation des objets environnants (10a, 11, 12, 13) pour déterminer l'angle d'orientation de la position cible.

12. Procédé selon la revendication 11, **caractérisé en ce que** le procédé comprend en outre les étapes de procédé suivantes :
- la détermination d'un angle d'orientation du véhicule autonome (1) dans la position cible en priorisant les objets environnants (10a, 11, 12, 13),
- la détermination des première (14) et deuxième (15) zones de stationnement en vérifiant que l'environnement présente les distances minimales nécessaires et les distances de confort appropriées par rapport aux objets environnants (10a, 11, 12, 13), et
- la sélection d'un point de la deuxième zone de stationnement (15) pour positionner le véhicule autonome (1) à l'aide de l'angle d'orientation.

13. Programme informatique avec un code de programme pour l'exécution du procédé selon l'une quelconque des revendications 11 à 12 lorsque le programme informatique est exécuté sur un ordinateur.

14. Support de stockage lisible par ordinateur comprenant des instructions qui amènent l'ordinateur sur lequel elles sont exécutées à mettre en œuvre le procédé selon l'une quelconque des revendications 11 à 12.

15. Véhicule (1), comprenant
un système d'aide au stationnement selon au moins l'une quelconque des revendications 1 à 9 précédentes, un programme informatique selon la revendication 13 ou un support de stockage lisible par ordinateur selon la revendication 14, et/ou
dans lequel une opération de stationnement est commandée à l'aide d'un procédé selon l'une quelconque des revendications 11 à 12.
